# EUROPEAN PATENT APPLICATION

(11) **EP 4 534 337 A1**
(43) Date of publication of application: **09.04.2025**
(21) Application number: 24203069.0
(22) Date of filing: 27.09.2024
(51) Int. Cl.: B60L 53/80

(54) **BATTERY POWERED INDUSTRIAL TRUCK**

(30) Priority: 27.09.2023 CN 202311264367
(71) Applicant: Jungheinrich AG, 22047 Hamburg (DE)
(72) Inventor: Plachta, Dominik, Shanghai (CN); Li, Mian, Shanghai (CN); Hao, Yong, Shanghai (CN)
(74) Representative: Hauck Patentanwaltspartnerschaft mbB

(57) **Abstract**

Industrial truck comprising at least one battery-powered drive, which has a main battery carried along for electrical supply and further comprising a battery charger via which the main battery can be charged and discharged, wherein at least one plug-in location is provided for one or more plug-in batteries, which plug-in location has electrical contacts for connection to a control module for each plug-in battery, the control module being configured to control at least two of the following operating and/or charging modes on the industrial truck:
- A reduced power operating mode, in which the control module is operated to draw power at a rate at which the power drawn from the main battery is less than a maximum output power of the main battery,
- A power optimized operating mode, in which the control module is operated to provide an amount of power such that at least one plug-in battery is connected additionally and supplies energy,
- A plug-in battery charging mode in which the control module is operated to draw a charging power from at least one plug-in battery for the main battery; and
- A charger charging mode in which at least one plug-in battery is charged from the battery charger.

## Description

The invention pertains to an industrial truck comprising at least one battery-powered drive, wherein the industrial truck is powered by a main battery carried along with the truck.

DE 10 2020 132 398 A1 discloses a forklift truck having an electric drive motor and a rechargeable lead-acid battery from which the electric drive motor can be provided with electric energy by means of an electronic control device. The truck is provided with a hooding device having a first and a second onboard connecting contact, connected to the poles of the rechargeable lead-acid battery. Furthermore, an auxiliary battery can be inserted into the holding device at forklift truck. The forklift truck uses a low voltage switching circuit which cuts off the electric circuit if the voltage of the auxiliary battery falls below a rated voltage of the lead-acid battery.

In the present situation, lead-acid or Li-ion batteries are applied to forklift trucks. The batteries can only be re-charged on- or off-board using an external power supply. The re-charging process takes place when the truck is stopped at an external charging device. Dynamical re-charging during the operation is possible by using inductive power supply for the truck. However, this technique is rather expensive since the floor of the warehouse has to be equipped with charging coils which are usually immersed into concrete for facilitating charging during operation.

The technical problem of the invention is to provide an industrial truck having a more flexible charging concept.

The invention solves the technical problem with an industrial truck comprising the features of claim 1. The further embodiments are subject matter of the independent claims.

The industrial truck according to the invention comprises at least one battery-powered drive, a main battery is carried on board along for electrical supply. Furthermore, the industrial truck comprises a battery charger via which the main battery can be charged and discharged. At least one plug-in location is provided on the industrial truck for one or more plug-in batteries at the truck. The plug-in location has electrical contacts for connecting each of the at least one plug-in battery with a control module. The control module is adapted to control at least two of the following operating modes and charging modes of the industrial truck. The first operating mode refers to a reduced power operation, in which the control module is controlled such that a value of a power rate is provided at which the power drawn from the main battery is less than a maximum output power of the main battery. In this operating mode of reduced power, the power drawn from the main battery is limited and below the maximum output-power value which can be drawn from the main battery. Furthermore, there is a power optimized operating mode in which the control module is operated to provide an amount of power such that at least one plug-in battery is contributing additionally to the power supply of the truck. In the power optimized operating mode, the plug-in battery supplies additional power to the industrial truck. Besides these two operating modes, several charging modes involving the plug-in batteries can be used for the industrial truck. In a plug-in battery charging mode, the control module is configured to draw charging power from at least one plug-in battery to re-charge the main battery. In other words, the plug-in battery charges the main battery at least partially in the plug-in battery charging mode. Furthermore, there is a charging mode, in which at least one plug-in battery is re-charged from the battery charger. In particular, the plug-in battery is re-charged while being plugged-in at the vehicle. According to the invention, at least two of the above four modes are provided at the truck according to the invention.

In a preferred embodiment, the control module switches into the plug-in battery charging mode when the industrial truck is stationary or traveling at a constant speed. In this plug-in battery charging mode, the plug-in battery helps to charge the main battery if the industrial truck is stationary or traveling at a constant speed. The constant speed leads to a constant rate of power taken from the plug-in batteries so that the plug-in battery can also perform re-charging the main battery preferably at a constant rate.

In a further preferred embodiment, the control module is activated during recuperative breaking of the industrial truck in order to apply at least part of the generated electrical power as charging power to at least one plug-in battery. This recuperative breaking therefore is not only for re-charging the main battery but also for re-charging the plug-in batteries which increases the flexibility of the plug-in battery in use. The advantage of recuperative breaking works therefore also for the plug-in battery and not only for the main battery.

In a preferred embodiment, the control module has further an operating mode which is optimized for a predefined operating period, in which power is drawn from at least one plug-in battery as a function of the state of charge (SOC) of the main battery, e.g. for an operating period which corresponds to the operating shift of the industrial truck. At least one plug-in battery and the main battery cooperate, so that the industrial truck can be operated during the entire shift.

In a further preferred embodiment, the control module comprises a DC/DC converter via which at least one plug-in battery is connected to an electrical network or an electrical bus connected to the electrical system of the vehicle. The electrical network or system of the vehicle comprises at least one battery powered drive and other electrical loads such as motors and devices. The DC/DC converter adapts the voltage of the plug-in battery, if necessary, into a rated voltage of the electrical network of the vehicle.

In a preferred embodiment, the value of the power drawn from the main battery is, in the power reduce operating mode, smaller than a limit value. The limit value is selected such that in the event of an additional power demand by further loads, the maximum power demanded together with the power already drawn from the main battery remains smaller than the maximum possible output power of the main battery. In this power reduced operating mode, the main battery has always enough capacity to fulfill at least for a short period of time of additional power demands by further loads.

In a preferred embodiment, a traction drive is fed by the main battery if the industrial truck runs in the plug-in battery-free mode. In the plug-in battery-free mode, the main battery is used to supply the traction drive of the industrial truck. Preferable, the power load is reduced in the plug-in battery-free mode e.g. where the forklift is driven at constant speed (without acceleration) and where there is no additional power consumed by for example a lifting operation.

In a preferred embodiment the control module is configured to draw the maximum power from the plug-in battery and the control module works in a power optimized operation mode. The additional power drawn from the plug-in battery is used if a power demand exceeds the maximum power of the main battery. In this embodiment of the power optimized operating mode, the plug-in battery is used as additional power supply if the power supply by the main battery is not sufficient.

In a preferred embodiment, an auxiliary operating mode is provided in which the control module is controlled to draw power exclusively from the plug-in batteries. Such a situation may occur when the main battery cannot be used, e. g. is overheated. In this situation, the plug-in batteries can entirely power the industrial truck while the main battery is cooling.

A specific embodiment of the invention is described with respect to the figures below:
- Figure 1: shows a schematic diagram of a modular designed energy system for an industrial truck and
- Figure 2: shows a modular designed Li-ion battery system implemented in the industrial truck.

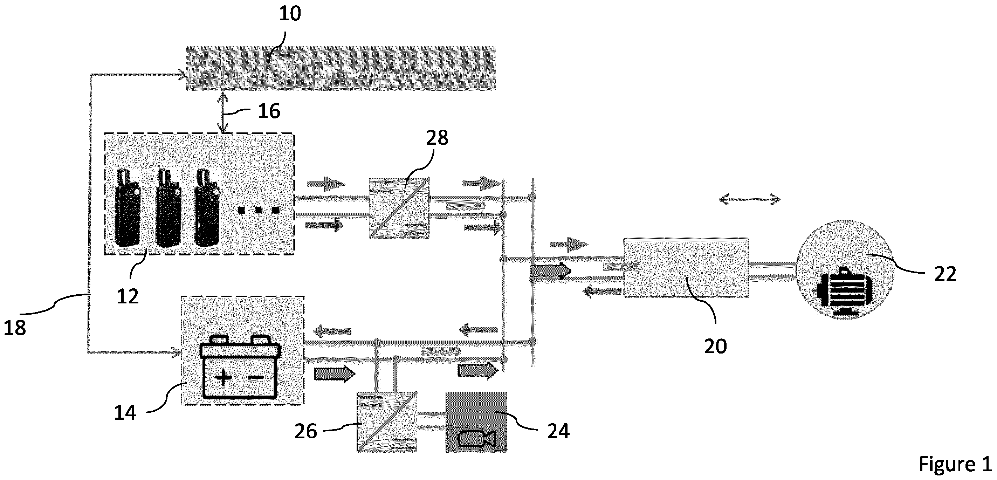

Figure 1 shows an energy management system 10 connected to plug-in batteries 12 and a rechargeable main battery 14. The energy management system 10 comprises a control module which controls via line 16 and line 18 the batteries 12, 14. Furthermore, the control module receives via line 18 a SOC-value of the main battery 14 and further values such as battery temperature, etc. For the plug-in battery 12, line 16 provides information for the control module with respect to the number of plug-in batteries and corresponding SOC-values. The main battery 14 is connected to a motor controller 20 to provide energy directly to a forklift motor 22. The forklift motor 22 may be a traction drive for the industrial truck, in particular a steered traction wheel. Besides the forklift motor 22, there are auxiliary loads 24 on-board of the industrial truck. The energy for the auxiliary loads such as lamps, cooling vans, displays, and so on, is also provided by the main battery 14. A DC/DC converter 26 is required for proper voltage conversion. The motor controller 20 comprises additionally a DC/AC converter which allows the motor controller 20 to convert the output voltage and current from the main battery 14 as DC into AC to meet the requested current for the forklift motor 22.

The plug-in batteries 12 are connected to a bidirectional DC/DC converter 28. The bidirectional DC/DC converter 28 allows to charge and discharge the plug-in batteries 12, depending on the mode of operation. As can be seen from figure 1, the energy from the plug-in batteries can be directed to the motor controller 20 and to a converter 26 for the auxiliary loads 24 or to the rechargeable main battery 14.

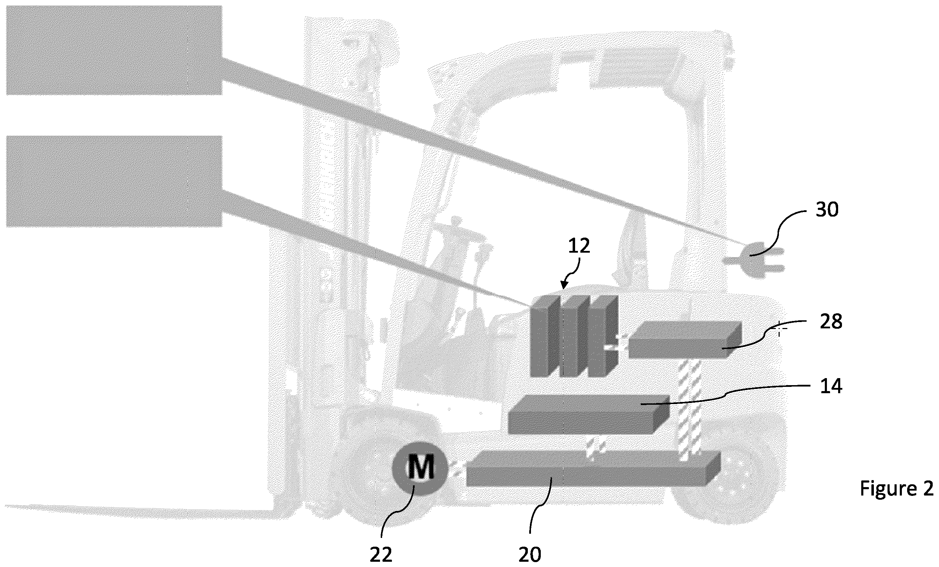

Figure 2 shows an industrial truck comprising plug-in battery modules 12, a bidirectional DC/DC converter 28, a main battery 14 and a motor controller 20 comprising a DC/AC converter and a forklift motor 22. Additionally, to the above-described energy management system an on/off-board charging device 30 can be provided to charge the main battery 14 and the plug-in batteries 12 in a stationary situation of the truck. The energy management system controls the plug-in batteries, the bidirectional DC/DC converter and the main battery. According to the power demand of the forklift, there are different operating modes for the truck. In the reduced power operating mode, the power drawn from the main battery always provides a reserve for additional loads. In the power optimized operating mode, additional power can be used from the plug-in batteries.

There are also different kinds of charging modes for the industrial truck. In the plug-in battery charging mode, the control module controls the charging power from the plug-in battery for the main battery. In the plug-in battery charging mode the plug-in battery is charged from the battery charger 30 while the plug-in battery is on board.

The advantage of the above-described industrial truck is that flexible charging can be performed while the truck is at work. The plug-in batteries can be standardized and modularized to be shared in different truck systems. Furthermore, it is possible to use the plug-in batteries in very different modes of operation and charging modes to provide an overall very flexible system.
- 10: energy management system
- 12: plug-in modular batteries
- 14: main battery
- 16: line
- 18: line
- 20: motor controller including DC/AC controller
- 22: forklift motor
- 24: auxiliary loads
- 26: bidirectional DC/DC converter
- 28: DC/DC converter for auxiliary loads
- 30: charging device

## Claims

1. Industrial truck comprising at least one battery-powered drive, which has a main battery (14) carried along for electrical supply and further comprising a battery charger (30) via which the main battery (14) can be charged and discharged, **characterized in that** at least one plug-in location is provided for one or more plug-in batteries (12), which plug-in location has electrical contacts for connection to a control module for each plug-in battery, the control module being configured to control at least two of the following operating and/or charging modes on the industrial truck:
- A reduced power operating mode, in which the control module is operated to draw power at a rate at which the power drawn from the main battery (14) is less than a maximum output power of the main battery (14),
- A power optimized operating mode, in which the control module is operated to provide an amount of power such that at least one plug-in battery is connected additionally and supplies energy,
- A plug-in battery charging mode in which the control module is operated to draw a charging power from at least one plug-in battery for the main battery (14); and
- A charger charging mode in which at least one plug-in battery is charged from the battery charger (30).

2. Industrial truck according to claim 1, **characterized in that** the control module switches to the plug-in battery charging mode when the industrial truck is stationary or traveling at a constant speed.

3. Industrial truck according to claim 1 or 2, **characterized in that** the control module is activated during a recuperative braking of the industrial truck in order to apply at least part of the generated electrical power as charging power to at least one plug-in battery.

4. Industrial truck according to any one of claims 1 to 3, **characterized in that** the control module further has an operating mode which is optimized for a determined operating period and in which power is drawn from at least one plug-in battery as a function of a state of charge (SOC) of the main battery (14).

5. Industrial truck according to one of claims 1 to 4, **characterized in that** the control module comprises a DC/DC (26) converter via which at least one plug-in battery is connected to an electrical network of the vehicle.

6. Industrial truck according to one of claims 1 to 5, **characterized in that** the value for the power drawn from the main battery in the power-reduced operating mode is smaller than a limit value, the limit value being selected such that, in the event of an additional power demand by a further load, the maximum power demanded together with the power already drawn from the main battery remains smaller than the maximum output power of the main battery (14).

7. Industrial truck according to one of claims 1 to 6, **characterized in that** in the plug-in battery free mode the traction drive is fed by the main battery (14).

8. Industrial truck according to one of the claims 1 to 7, **characterized in that** in the power-optimized operating mode the control module is controlled to draw power from the plug-in battery if a power demand exceeds the maximum output power of the main battery (14).

9. Industrial truck according to one of the claims 1 to 8, **characterized in that** an auxiliary operating mode is provided in which the control module is controlled to draw power exclusively from the plug-in batteries (12).
